# EUROPÄISCHE PATENTSCHRIFT

(11) **EP 0 660 545 B1**
(45) Veröffentlichungstag und Bekanntmachung des Hinweises auf die Patenterteilung: **26.03.2003**
(21) Anmeldenummer: 94119397.1
(22) Anmeldetag: 08.12.1994
(51) Int. Cl.: H04B 7/212

(54) **System zur Erzeugung von Rundfunksignalen für eine Satellitenübertragung**
Broadcast signal elaboration system for satellite transmission
Système d'élaboration de signaux de diffusion pour transmission par satellites

(30) Priorität: 21.12.1993 DE 4343629
(43) Veröffentlichungstag der Anmeldung: 28.06.1995
(73) Patentinhaber: GRUNDIG Aktiengesellschaft, 90471 Nürnberg (DE)
(72) Erfinder: Kays, Rüdiger, Dr., GRUNDIG E.M.V., Max Grundig, D-90762 Fürth (DE)

(56) Entgegenhaltungen:
- EP-A- 0 467 651
- WO-A-94/08405
- DE-C- 3 125 894
- GB-A- 2 232 561
- GLOBAL TELECOMMUNICATIONS CONFERENCE, Bd.3, November 1987, TOKYO,JP; Seiten 2139 - 2143, XP12668 K.G.JOHANNSEN 'Synchronization of Remote Digital Clusters Via Satellite for ISDNs.'

## Beschreibung

Die Erfindung betrifft ein System zur Erzeugung von digitalen Rundfunksignalen für eine Satellitenübertragung mit den im Oberbegriff des Anspruchs 1 angegebenen Merkmalen.

Derzeit erfolgt in der Fernsehtechnik der Übergang von analogen zu digitalen Übertragungssystemen. In diesem Zusammenhang wird auch die Satellitenübertragung umgestellt. Mittels eines Quellencodierverfahrens nach dem MPEG-Standard ist eine Datenkompression möglich, die' eine besonders effiziente Übertragung zuläßt. Während in der analogen Technik auf einem Satellitentransponder von beispielsweise 33 MHz Bandbreite bisher ein Fernsehprogramm übertragen wird, ist mit der digitalen Technik eine Verteilung von 5 - 10 Programmen gleicher Qualität auf dem gleichen Transponder möglich.

Diese Vielfalt von Programmen erfordert einen Multiplex mit geeigneter Verwaltung der Daten. Auch dieser Aspekt ist im MPEG-Standard geregelt. Hier wird vorgesehen, die Datenströme in Blöcke aufzuteilen, die im Zeitmultiplex übertragen werden. Ein Programm besteht aus mehreren Datenströmen unterschiedlicher Art (Videoinformation, Audioinformation, Hilfsinformation), den sogenannten elementaren Datenströmen. Die elementaren Datenströme eines Programms werden in einem Programmultiplexer zu einem Programmdatenstrom zusammengefügt. Verschiedene Programmdatenströme werden in einem Transportmultiplexer zum Transportdatenstrom zusammengesetzt. Die einzelnen Datenblöcke, die beispielsweise eine Länge von 188 Byte haben können, werden jeweils mit Synchronisations- und Identifikationsbytes versehen, um dem Empfänger die Auswahl der richtigen Blöcke zur Decodierung und Darstellung der Information auf einem Fernsehempfänger zu ermöglichen.

Der Tranportdatenstrom wird beispielsweise beim Programmanbieter zusammengesetzt und dann über einen sogenannten Uplink zum Satelliten übertragen. Dieser setzt das Signal um und verteilt es für den Satellitendirektempfang beim Zuschauer. Alle Programme eines Transponders müssen dabei an einem Punkt zusammengeführt werden.

Der Nachteil dieses Konzeptes ist es, daß bei Nutzung der Kapazität eines Transponders durch mehrere Programmanbieter die Programme einer gemeinsamen Verarbeitung zugeführt werden müssen. Hierbei entstehen erhebliche Kosten für die Zuführungsleitungen.

Diesen Nachteil kann man umgehen, indem man den Transponder im Frequenzmultiplex benutzt. Dieses Verfahren ist bereits an verschiedenen Stellen benutzt worden, indem die Bandbreite eines Transponders in zwei Hälften aufgeteilt wurde. Die Nachteile dieses Verfahrens liegen in der begrenzten Flexibilität (es sind nicht beliebige Aufteilungen möglich), in der Notwendigkeit, für jedes Teilungsverhältnis spezifische Parameter im Empfänger implementieren zu müssen und insbesondere in der Tatsache, daß der Satellitenkanal wegen der Nichtlinearität der Verstärker im Satelliten Intermodulationen zwischen den Teilbändern einführt. Um diese Störungen klein zu halten, ist eine Reduktion der Transponderleistung erforderlich. Dadurch erfordert der Empfang des Signals größere Empfangsschüsseln. Für die Fernsehprogrammverteilung sind diese Nachteile nicht akzeptabel.

Aus GB-A-2232261 ist ein System zur Übertragung von Femsehprogrammen via Satellit offenbart. Hierbei werden Mac-Rundfunksignale von einer Bodenstation an einen Satelliten mit einem zugehörigen Transponder übertragen. Die Übertragung erfolgt im Zeitmultiplex.

Aufgabe der vorliegenden Erfindung ist es, einen präzise Synchronisation für ein Satellitenübertragungssystem anzugeben.

Im folgenden wird die Erfindung anhand der Figuren näher erläutert. Es zeigt
- Figur 1 ein Blockschaltbild zur beispielhaften Erläuterung eines Systems gemäß der Erfindung und
- Figur 2 ein Zeitdiagramm zur Veranschaulichung der Aufteilung des zur Signalübertragung insgesamt zur Verfügung stehenden Zeitintervalls auf die einzelnen Bodenstationen.

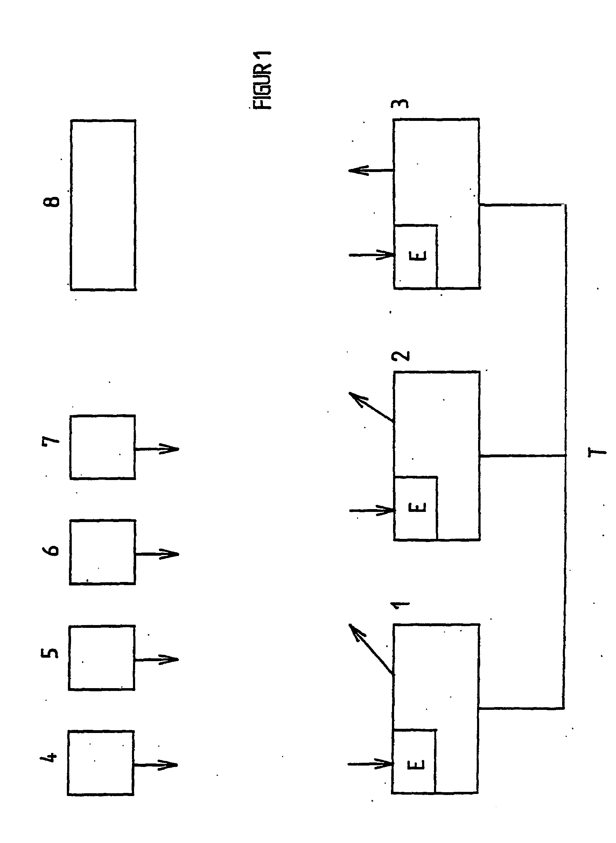

Die Figur 1 zeigt ein Blockschaltbild zur beispielhaften Erläuterung eines Systems gemäß der Erfindung. Das gezeigte System weist Bodenstationen 1, 2, 3 auf; die dezentral angeordnet sind und in denen digitale Rundfunksignale für eine Satellitenübertragung erzeugt werden.

Dazu werden die von den jeweiligen Signalquellen abgeleiteten Signale, bei denen es sich um Fernsehprogramme handelt, die Videoinformationen, Audioinformationen und Hilfsinformationen enthalten, einer Quellencodierung nach dem MPEG-Standard unterworfen. Bei dieser Quellencodierung werden Datenpakete erzeugt, welche an ihrem Anfang jeweils ein Synchronisationsbyte und Identifikationsbytes aufweisen. Die Synchronisationsbytes werden empfangsseitig zur Synchronisation der Empfänger verwendet. Aus den Identifikationsbytes erkennt der Empfänger die Zugehörigkeit des jeweiligen Datenpaketes zu einem bestimmten Fernsehprogramm.

Die quellencodierten Datenpakete werden anschließend einer Kanalcodierung unterworfen, um das Signal an die spezifischen Eigenschaften einer Satellitenübertragungsstrecke anzupassen. Im Rahmen dieser Kanalcodierung werden die Signale mittels eines Reed-Solomon-Coders, eines Interleavers, eines Faltungscoders und eines QPSK-Modulators in ein für eine Satellitenübertragung geeignetes Signal umgesetzt.

Die auf diese Weise erzeugten Signale werden mittels eines Uplinks zu einem Satellitentransponder 8 übertragen, dessen Bandbreite beispielsweise 33 MHz beträgt.

Beispielsweise sollen über den Satellitentransponder 8 die fünf Fernsehprogramme TV1, TV2, TV3, TV4 und TV5 übertragen werden, wobei die Programme TV1 und TV2 in der Bodenstation 1, die Programme TV3 und TV4 in der Bodenstation 2 und das Programm TV5 in der Bodenstation 3 erzeugt werden.

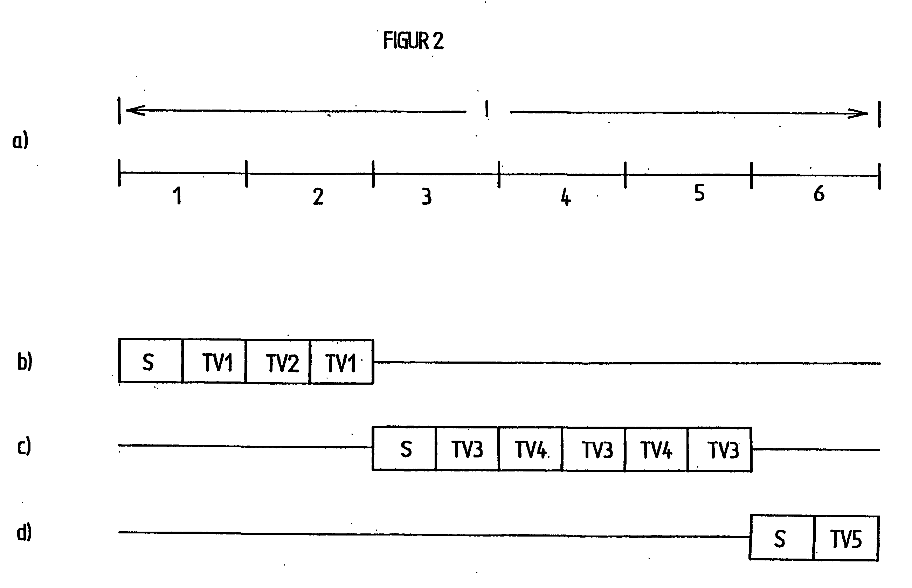

Zu dieser Übertragung wird - wie aus der Figur 2 ersichtlich ist - das für die Fernsehsignalübertragung insgesamt zur Verfügung stehende Zeitintervall I in Zeitschlitze 1 - 6 aufgeteilt (siehe Figur 2a). Die Zeitschlitze 1 und 2 werden der Bodenstation 1 zugeteilt, in welcher die Fernsehprogramme TV1 und TV2 erzeugt werden (siehe Figur 2b). Die Zeitschlitze 3, 4 und 5 werden der Bodenstation 2 zugeteilt, in welcher die Fernsehprogramme TV3 und TV4 erzeugt werden (siehe Figur 2c). Der Zeitschlitz 6 wird der Bodenstation 3 zugeteilt, in welcher das Fernsehprogramm TV5 erzeugt wird (siehe Figur 2d). In jedem der gezeigten Zeitschlitze wird eine Vielzahl von Datenpaketen übertragen, welche dem jeweiligen Fernsehprogramm zugehörig sind.

Die Übertragung der von den Bodenstationen 1, 2 und 3 abgeleiteten digitalen Fernsehsignale zum Satellitentransponder 8 erfolgt demnach im Zeitmultiplex.

Die Synchronisierung der Bodenstationen 1, 2 und 3 erfolgt unter Verwendung einer präzisen gemeinsamen - Zeitbasis. In vorteilhafter Weise wird zu diesem Zweck ein von den Satelliten des GPS-Systems (Global Positioning System) abgestrahltes Zeitreferenzsignal verwendet. Bei diesem GPS-System, welches bespielsweise in den Zeitschriften Funkschau 23/1989, S. 57-59 und NTZ Bd. 38 (1985), Heft 9, S. 622-625, näher erläutert ist, handelt es sich um ein satellitengestütztes Ortungssystem, mittels dessen ein Benutzer weltweit seine exakte Momentanposition bestimmen kann. Dazu werden von mehreren Satelliten 4, 5, 6, 7 Signale ausgestrahlt, welche Informationen über den jeweiligen Satelliten und die exakte Zeit, zu welcher eine Nachricht ausgestrahlt wird, enthalten. Die Positionsbestimmung erfolgt durch Messung der Laufzeiten der von den Satelliten ausgestrahlten Signale vom jeweiligen Satelliten zum Empfänger. Im Rahmen dieser Messung erfolgt ein Vergleich der Uhrzeit zwischen Satellit und Empfänger. Damit das GPS-System mit einer sehr hohen Genauigkeit arbeiten kann, handelt es sich bei den in den Satelliten angeordneten Zeitgebern um Atomuhren, welche lediglich eine Abweichung von 10⁻¹⁴ haben.

Um eine Synchronisierung mittels des von den GPS-Satelliten 4, 5, 6, 7 abgestrahlten Zeitreferenzsignals zu ermöglichen, ist in jede der Bodenstationen 1, 2, 3 ein GPS-Empfänger E integriert. Dieser GPS-Empfänger E ist mit einem Ausgang ausgestattet, an welchem das genannte Zeitreferenzsignal zur Verfügung gestellt wird.

Die Erzeugung der den Fernsehprogrammen TV1, TV2, TV3, TV4 und TV5 entsprechenden Signale erfolgt unter Verwendung des genannten Zeitreferenzsignals. Ein Vorteil der Verwendung eines derartigen Zeitreferenzsignals besteht darin, daß innerhalb des Datenstroms, der über den Satellitentransponder 8 übertragen wird, keine Übertragungskapazität für ein Zeitreferenzsignal reserviert werden muß, so daß eine höhere Datenrate erzielbar ist.

Da die Bodenstationen aber trotz Verwendung der genannten präzisen gemeinsamen Zeitbasis nicht völlig synchron arbeiten können, tritt beim Wechsel zwischen 2 Bodenstationen eine Phasenverschiebung auf, so daß eine Neusynchronisation des Empfängers notwendig ist.

Um diese Neusynchronisation ohne das Auftreten eines Datenverlustes zu ermöglichen, werden - wie aus den Figuren 2b - 2d hervorgeht - immer dann, wenn ein Übergang von einer Bodenstation zu einer anderen erfolgt, Datenpakete S übertragen, die zwar Synchronisationsbytes und auch Identifikationsbytes, die diese Datenpakete S als Datenpakete ohne Nutzinformation kennzeichnen, aber keine Nutzinformationen enthalten. Durch die Kennzeichnung der Datenpakete S als Datenpakete ohne Nutzinformation wird erreicht, daß der Empfänger diese Datenpakete S erkennt und keine unbrauchbare Information auswertet.

Gemäß einer vorteilhaften Weiterbildung der Erfindung ist die Zuordnung der Zeitschlitze zu den verschiedenen Bodenstationen nicht fest, sondern adaptiv steuerbar. Zu diesem Zweck sind die Bodenstationen 1, 2, 3 über eine Telefonleitung T miteinander vernetzt. Die Steuerschaltung einer der Bodenstationen wird als zentrale Steuereinheit verwendet, die den einzelnen Bodenstationen - je nach dem momentanen Bedarf - Zeitschlitze zuteilt oder entzieht.

Gemäß einer vorteilhaften Weiterbildung der Erfindung können in einer der Bodenstationen auch Hilfsinformationen, die von mehreren Bodenstationen abgeleitet sind, zu einem Informationspaket zusammengefügt und - wie oben beschrieben - in den dem Satellitentransponder insgesamt zugeführten Datenstrom eingesetzt werden. Bei diesen Hilfsinformationen kann es sich beispielsweise um die Service Identification Daten des MPEG-Standards handeln. Der Vorteil dieser Weiterbildung besteht darin, daß der Empfänger die Hilfsinformationen zur optimalen Decodierung nutzen kann wie beim Empfang eines Transportdatenstroms, der komplett in nur einer Bodenstation erzeugt wurde.

## Patentansprüche

1. System zur Erzeugung von digitalen Rundfunksignalen für eine Satellitenübertragung, mit mehreren Bodenstationen (1, 2, 3) als Rundfunksignalquellen und einem Satellitentransponder, wobei die Rundfunksignalübertragung von den Bodenstationen zum Satellitentransponder im Zeitmultiplex erfolgt,
**dadurch gekennzeichnet,daß**
jeder Bodenstationen (1, 2, 3) innerhalb des für die Rundfunksignalübertragung insgesamt zur Verfügung stehenden Zeitintervalles mindestens ein Zeitschlitz zugeordnet ist, die Übertragung eines Rundfunksignales einer der Bodenstationen (1, 2, 3) und mindestens einem Zeitschlitz zugeordnet ist, die Synchronisation der Bodenstation über eine präzise gemeinsame Zeitbasis erfolgt und unmittelbar nach dem Wechsel der Zuordnung der Übertragung des Rundfunksignales, von einer Bodenstation zu einer anderen Bodenstation Datenpakete übertragen werden, die Synchronisationsbytes und Identifikationsbytes aufweisen, aber keine Nutzinformation enthalten.

2. System nach Anspruch 1,
**dadurch gekennzeichnet,**da**ß**
die gemeinsame Zeitbasis präzise ist und als gemeinsame Zeitbasis ein
von den Satelliten (4, 5, 6, 7) eines Ortungs- und/oder Navigationssystems abgestrahltes Zeitreferenzsignal verwendet wird.

3. System nach einem oder mehreren der vorhergehenden Ansprüche
**dadurch gekennzeichnet,** da**ß**
die Zuordnung der Zeitschlitze zu den Bodenstationen adaptiv gesteuert wird.

4. System nach einem oder mehreren der vorhergehenden Ansprüche,
**dadurch gekennzeichnet, daß**
die Bodenstationen (1, 2, 3) miteinander vemetzt sind.

5. System nach Anspruch 4
**dadurch gekennzeichnet, daß**
die Vernetzung über eine Telefonleitung erfolgt.

6. System nach einem oder mehreren der vorhergehenden Ansprüche,
**dadurch gekennzeichnet, daß**
die zu übertragenden Rundfunksignale in Form von Datenpaketen vorliegen, von denen jedes mindestens ein Synchronisations- und Identifikationsbyte aufweist, und daß jede Bodenstation (1, 2, 3) in einem Zeitschlitz eine Vielzahl von Datenpaketen erzeugt.

7. System nach einem oder mehreren der vorhergehenden Ansprüche,
**dadurch gekennzeichnet, daß**
in einer Bodenstation (1, 2, 3) Hilfsinformationen die von mehreren Bodenstationen (1, 2, 3) abgeleitet sind, zu Informationspaketen zusammengefügt werden.

## Claims

1. System for generating digital broadcast signals for satellite transmission, comprising a plurality of ground stations (1, 2, 3) as broadcast signal sources and a satellite transponder, wherein the broadcast signals are transmitted from the ground stations to the satellite transponder in time-division multiplex, **characterized in that** at least one time slot is assigned to each ground station (1, 2, 3) within the time interval available in total for the broadcast signal transmission, the transmission of a broadcast signal is assigned to one of the ground stations (1, 2, 3) and to at least one time slot, the ground station is synchronized by means of a precise common time base, and immediately after the change in the assignment of the transmission of the broadcast signal from one ground station to another ground station, data packets are transmitted that comprise synchronization bytes and identification bytes but do not contain any user information.

2. System according to Claim 1, **characterized in that** the common time base is precise and a time reference signal emitted by the satellites (4, 5, 6, 7) of a location and/or navigation system is used as common time base.

3. System according to one or more of the preceding claims, **characterized in that** the assignment of the time slots to the ground stations is adaptively controlled.

4. System according to one or more of the preceding claims, **characterized in that** the ground stations (1, 2, 3) are interconnected with one another.

5. System according to Claim 4, **characterized in that** the interconnection takes place via a telephone line.

6. System according to one or more of the preceding claims, **characterized in that** the broadcast signals to be transmitted are in the form of data packets of which each comprises at least a synchronization byte and identification byte and **in that** each ground station (1, 2, 3) generates a multiplicity of data packets in a time slot.

7. System according to one or more of the preceding claims, **characterized in that** auxiliary information items that are derived from a plurality of ground stations (1, 2, 3) are combined in a ground station (1, 2, 3) to form information packets.

## Revendications

1. système pour produire des signaux de radiodiffusion numériques pour une transmission par satellite, comportant plusieurs stations au sol (1, 2, 3) en tant que sources de signaux de radiodiffusion et un transpondeur du satellite, la transmission de signaux de radiodiffusion s'effectuant selon un multiplexage temporel depuis les stations au sol en direction du transpondeur du satellite, **caractérisé en ce qu'**à chaque station au sol (1, 2, 3) est associé, au cours d'un intervalle de temps globalement disponible pour la transmission de signaux de radiodiffusion, au moins un créneau temporel, que la transmission d'un signal de radiodiffusion est associée à l'une des stations au sol (1, 2, 3) et au moins à un créneau temporel, que la synchronisation de la station au sol s'effectue par l'intermédiaire d'une base de temps précise commune et qu'aussitôt après le changement de l'association de la transmission du signal de radiodiffusion il se produit, d'une station au sol à une autre station au sol, la transmission de paquets de données qui contiennent des octets de synchronisation et des octets d'identification, mais qui ne contiennent aucune information utile.

2. Système selon la revendication 1, **caractérisé en ce que** la base de temps commune est précise et qu'un signal de référence de temps, émis par les satellites (4, 5, 6, 7) d'un système de localisation et/ou de navigation.

3. Système selon une ou plusieurs des revendications précédentes, **caractérisé en ce que** l'association des créneaux temporels aux stations au sol est commandée de façon adaptative.

4. Système selon l'une des revendications précédentes, **caractérisé en ce que** les stations au sol (1, 2, 3) sont maillées entre elles.

5. Système selon la revendication 4, **caractérisé en ce que** le maillage s'effectue au moyen d'une ligne téléphonique.

6. Système selon une ou plusieurs des revendications précédentes, **caractérisé en ce que** les signaux de radiodiffusion devant être transmis sont présents sous la forme de paquets de données, dont chacun comporte au moins un octet de synchronisation et d'identification, et que chaque station au sol (1, 2, 3) produit, pendant un créneau temporel, une multiplicité de paquets de données.

7. Système selon une ou plusieurs des revendications précédentes, **caractérisé en ce que** dans une station au sol (1, 2, 3), des informations auxiliaires, qui sont dérivées de plusieurs stations au sol (1, 2, 3), sont rassemblées pour former des paquets d'informations.
